# EUROPEAN PATENT APPLICATION

(11) **EP 3 467 704 A1**
(43) Date of publication of application: **10.04.2019**
(21) Application number: 17802043.4
(22) Date of filing: 09.05.2017
(51) Int. Cl.: G06K 9/00

(54) **IMAGE COLLECTOR AND FINGERPRINT COLLECTION DEVICE**

(30) Priority: 25.05.2016 CN 201610353122; 14.02.2017 CN 201710077434
(71) Applicant: Vkansee (Beijing) Technology Co., Ltd., Beijing 100193 (CN)
(72) Inventor: ZHANG, Mingfang, Beijing 100193 (CN); WANG, Yuanjing, Beijing 100193 (CN)
(74) Representative: Patent- und Rechtsanwälte Ullrich & Naumann
(86) International application number: PCT/CN2017/083605
(87) International publication number: WO 2017/202197

(57) **Abstract**

Disclosed are an image acquisition device and a fingerprint acquisition apparatus. The image acquisition device includes a transparent plate (11), an image sensor (12) disposed under the transparent plate (11), and a light blocking layer (13) disposed on an upper surface of the transparent plate (11). The light blocking layer (13) is provided with a plurality of light transmission pinholes (14), and an image-side angle of view of the light transmission pinhole (14) is *λ* = arcsin(*n*₁ / *n*₂), where *n*₂ > *n*₁*.* A distance *d* between centers of adjacent light transmission pinholes (14) is greater than or equal to a diameter *D_{image}* of an image-side field of view of the light transmission pinhole (14). The image acquisition device confines the size of the image-side field of view of the light transmission pinhole (14) by using transparent mediums with different refractive indexes. Because a thickness of the light blocking layer (13) bearing the light transmission pinholes (14) is much smaller than that of an existing field-of-view diaphragm of an imaging pixel, the image acquisition device can become much thinner. In addition, because etching for the light transmission pinholes (14) on the light blocking layer (13) is easier than a process manufacturing the field-of-view diaphragm, the image acquisition device can be easily manufactured at low costs.

## Description

### CROSS-REFERENCES TO RELATED APPLICATION

The present application claims priority of Chinese Patent Application No. 201610353122.8 filed with the State Intellectual Property Office on May 25, 2016 and entitled "IMAGE ACQUISITION DEVICE AND FINGERPRINT ACQUISITION APPARATUS", and Chinese Patent Application No. 201710077434.5 filed with the State Intellectual Property Office on February 14, 2017 and entitled "IMAGE ACQUISITION DEVICE AND FINGERPRINT ACQUISITION APPARATUS", which are incorporated herein by reference in its entirety.

### TECHNICAL FIELD

The present application relates to the field of image acquisition technology, and specifically to an image acquisition device and a fingerprint acquisition apparatus using the image acquisition device.

### BACKGROUND OF THE INVENTION

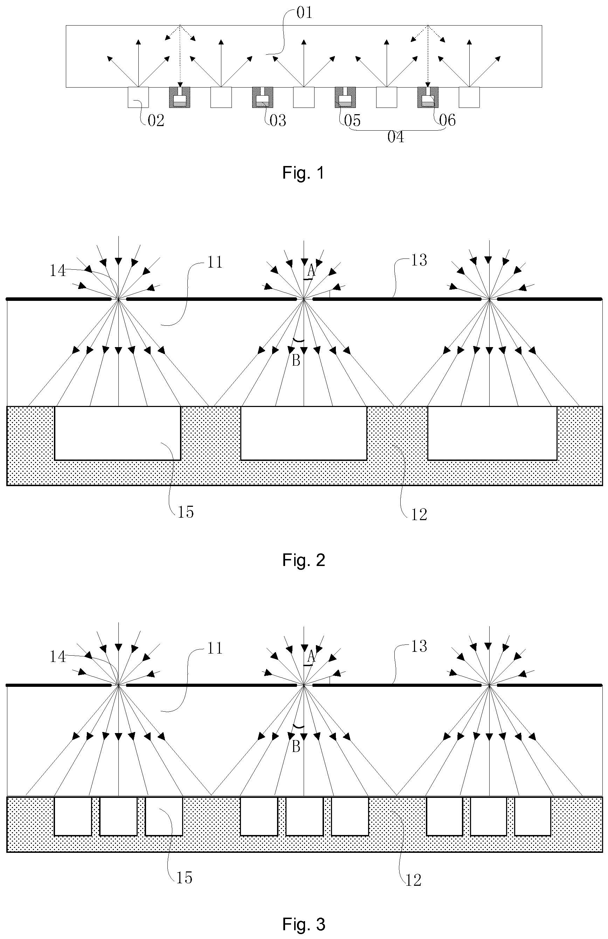

In the patent applications filed by the present applicant prior to the present one, in order not to make image-side fields of view of imaging pixels in an image acquisition device overlap with each other, an angle of view of each imaging pixel needs to be confined. Fig. 1 is a schematic structural diagram of a display screen having a fingerprint acquisition function in a prior application. As shown in Fig. 1, the display screen includes a display cover plate 01, a display pixel 02 and an imaging pixel 03 that are disposed under the display cover plate 01, and a field-of-view diaphragm 04 disposed between the imaging pixel 03 and the display cover plate. An angle of view of the imaging pixel is defined by the field-of-view diaphragm 04. The field-of-view diaphragm 04 includes a light blocking frame 05 and a diaphragm aperture 06 that is formed by the enclosure of the light blocking frame 05. The angle of view of the diaphragm aperture 06 determines the angle of view of the imaging pixel 03.

In the case of confining the angle of view by using the field-of-view diaphragm, because the field-of-view diaphragm is required to be thick, an image acquisition device manufactured with the field-of-view diaphragm is thick as well. However, as electronic devices are currently required to be very thinner, a thick image acquisition device is not able to meet the installation and application requirements of the electronic devices. In addition, because the field-of-view diaphragm has a complicated manufacturing process, the image acquisition device requires high manufacturing costs.

### SUMMARY OF THE INVENTION

To resolve a problem that an existing image acquisition device using a field-of-view diaphragm is thick and requires high manufacturing costs, the present application provides a new image acquisition device. Furthermore, the present application provides a fingerprint acquisition apparatus using the image acquisition device.

The present application provides an image acquisition device, including a transparent plate, an image sensor disposed under the transparent plate, and a light blocking layer disposed on an upper surface of the transparent plate. The light blocking layer is provided with a plurality of light transmission pinholes; and an image-side angle of view of the light transmission pinhole is *λ* = arcsin(*n*₁/*n*₂), where *n*₁ is a refractive index of a medium above the light blocking layer, *n*₂ is a refractive index of the transparent plate, and *n*₂ > *n*₁. A distance *d* between centers of adjacent light transmission pinholes is greater than or equal to a diameter *D_{image}* of an image-side field of view of the light transmission pinhole, where *D_{image}* = 2*h*₁ × tan *λ*, and *h*₁ is a thickness of the transparent plate.

The present application provides another image acquisition device, including: an image sensor; a light blocking layer that is disposed over the image sensor and has several light transmission pinholes; and one or more transparent medium layers disposed between the light blocking layer and the image sensor, and one or a plurality of transparent medium layers disposed on the light blocking layer. A refractive index of at least one transparent medium layer is less than that of the remaining transparent medium layers. A size of an image-side field of view formed on the image sensor by the light transmission pinhole has a confined value.

Optionally, the transparent medium layer having the smallest refractive index is a vacuum layer or an air layer.

The present application further provides a fingerprint acquisition apparatus, including the foregoing image acquisition device.

The image acquisition device provided in the present application confines the size of the image-side field of view of the light transmission pinhole by using transparent mediums having different refractive indexes. Because the thickness of the light blocking layer bearing the light transmission pinholes is much smaller than that of the existing field-of-view diaphragm of the imaging pixel, the image acquisition device provided in the present application can become much thinner. In addition, because etching for the light transmission pinholes on the light blocking layer is easier than a process of manufacturing the field-of-view diaphragm, the image acquisition device provided in the present application can be easily manufactured at low costs.

### BRIEF DESCRIPTION OF THE DRAWINGS

To describe the technical solutions in the prior art or in the present application more clearly, the followings briefly describes the accompanying drawings used in combination with the prior art or the specific implementations of the present application. Apparently, the following accompanying drawings in combination with the specific implementations are intended only for easily understanding the embodiments of the present application, and persons of ordinary skill in the art may derive other drawings from these accompanying drawings without creative efforts.
Fig. 1 is a schematic structural diagram of a display screen having a fingerprint acquisition function in a prior patent application;
Fig. 2 is a schematic structural diagram illustrating an image acquisition device according to the first embodiment;
Fig. 3 is a schematic structural diagram illustrating another image acquisition device according to the first embodiment;
Fig. 4 is a schematic structural diagram illustrating an image acquisition device according to the second embodiment; and
Fig. 5 is a schematic structural diagram illustrating an image acquisition device according to the third embodiment.

In Fig. 1: 01- a display cover plate, 02- a display pixel, 03- an imaging pixel, 04-a field-of-view diaphragm, 05- a light blocking frame, and 06- a diaphragm aperture.

In Fig. 2 and Fig. 3: 11- a transparent plate, 12- an image sensor, 13- a light blocking layer, 14- a light transmission pinhole, and 15- an imaging pixel.

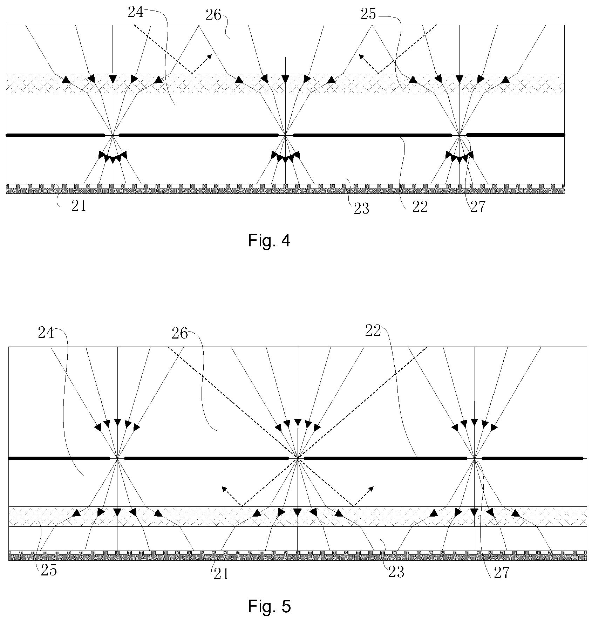

In Fig. 4 and Fig. 5: 21- an image sensor, 22- a light blocking layer, 23- a first transparent medium layer, 24- a second transparent medium layer, 25- a third transparent medium layer, 26- a fourth transparent medium layer, and 27- a light transmission pinhole.

### DETAILED DESCRIPTION OF THE EMBODIMENTS

To make those skilled in the art better understand the technical solutions in the present application, the technical solutions in the embodiments of the present application will be described clearly and completely with reference to the accompanying drawings thereof. Apparently, the described embodiments will be merely some of, rather than all of the embodiments of the present application. All other embodiments obtained by persons of ordinary skill in the art based on the embodiments of the present application without creative efforts shall fall into the protection scope of the present application.

### First embodiment

Fig. 2 is a schematic structural diagram of an image acquisition device according to the first embodiment. As shown in Fig. 2, the image acquisition device includes a transparent plate 11, an image sensor 12 disposed under the transparent plate 11, and a light blocking layer 13 disposed on the transparent plate 11. The image sensor 12 is provided with several imaging pixels 15. The light blocking layer 13 is provided with several light transmission pinholes 14.

The light blocking layer 13 is made of opaque material. Preferably, the light blocking layer 13 is a light blocking film. In the actual processing, the light blocking layer 13 may be coated onto the transparent plate 11 through a vapor evaporation method or an electroplating method, and the light transmission pinholes 14 on the light blocking layer 13 are formed by an etching process. During the actual application, a thickness of the light blocking layer 13 is less than 100 *um.*

In the present embodiment, an image-side angle of view of each light transmission pinhole 14 is *λ* = arcsin(*n*₁/*n*₂), where *n*₁ is a refractive index of a medium above the light blocking layer 13, *n*₂ is a refractive index of the transparent plate 11, and *n*₁ < *n*₂*.* During the actual application, a layer of the medium above the transparent plate 11 is usually an air layer, and the transparent plate 11 is common light transmission material in the optics field.

In the present embodiment, a thickness of the transparent plate 11 is *h*₁, and a diameter of an image-side field of view formed on the image sensor 12 by each light transmission pinhole 14 is *D_{image}* = 2*h*₁ × tan *λ*. The light transmission pinholes 14 are arranged in an array manner, and a distance *d* between centers of adjacent light transmission pinholes 14 is greater than or equal to the diameter *D_{image}* of the image-side field of view of the light transmission pinhole 14.

To make persons of related skill understand the technical solution of image acquisition by the image acquisition device in the present embodiment more conveniently, the principle of the image acquisition device in the present application is described below in detail.

As shown in Fig. 2, a light travels from a medium outside the transparent plate 11 into the transparent plate 11, with an incident angle A and an emergent angle B. According to the law of refraction of light, a relationship between A and B is sin *A*/sin *B* = *n*₂ / *n*₁. When the incident angle A has a maximum value of 90 degrees, the maximum value of the emergent angle B (i.e., the maximum value of the image-side angle of view) is *λ*. In other words, on the premise that *n*₁ < *n*₂, the emergent angle is less than or equal to *λ*; and on the premise that the thickness *h*₁ of the transparent plate 11 is determined, each light transmission pinhole 14 has a confined image-side field of view, and the diameter of the image-side field of view is *D_{image}* = 2*h*₁ × tan *λ.*

Because the distance *d* between the centers of the adjacent light transmission pinholes 14 is greater than or equal to *D_{image},* the image-side fields of view of different light transmission pinholes 14 do not overlap with each other. Therefore, the light traveling through each light transmission pinhole 14 can form a clear image on the image sensor 12.

As shown in Fig. 2, in the present embodiment, the image-side field of view of each light transmission pinhole 14 may correspond to only one imaging pixel 15. Fig. 3 is a schematic structural diagram of another image acquisition device according to the first embodiment. As shown in Fig. 3, in another embodiment, on the premise that the image-side fields of view of the light transmission pinholes 14 do not overlap with each other, the image-side field of view of each light transmission pinhole 14 may correspond to a plurality of imaging pixels 15.

In the present embodiment, lights from various directions above the light blocking layer 13 can be all transmitted into the light transmission pinhole 14, and after being refracted by the transparent plate 11, the emergent angle of the light in the transparent plate 11 (i.e., the image-side angle of view of the light transmission pinhole 14) is confined within a range of *λ*.

It can be understood from the foregoing technical solution that, the image acquisition device provided by the present embodiment includes the transparent plate 11, and the light blocking layer 13 that is disposed on the transparent plate 11 and is etched with the light transmission pinholes 14. Because the refractive index of the transparent plate 11 is greater than that of the medium above the light blocking layer, the image-side field of view of the light transmission pinhole 14 on the image sensor 12 is confined to a determined range. Because the distance *d* between light transmission pinholes 14 is greater than or equal to the diameter *D_{image}* of the image-side field of view of the light transmission pinhole 14, the image-side fields of view of the adjacent light transmission pinholes 14 do not overlap with each other. Because the thickness of the light blocking layer 13 is much smaller than that of the field-of-view diaphragm provided in the prior art, the image acquisition device of the present embodiment can become much thinner. In addition, because etching for the light transmission pinholes 14 on the light blocking layer 13 is easier than manufacturing the field-of-view diaphragm, the image acquisition device can be easily manufactured at low costs.

### Second embodiment

Fig. 4 is a schematic structural diagram of an image acquisition device according to the second embodiment. As shown in Fig. 4, the image acquisition device provided in the present embodiment includes an image sensor 21, a first transparent medium layer 23, a light blocking layer 22, a second transparent medium layer 24, a third transparent medium layer 25, and a fourth transparent medium layer 26 from bottom to top. A thickness of the first transparent medium layer 23 is *h*₁.

The light blocking layer 22 is made of opaque material, and is provided with several light transmission pinholes 27 on its surface. In the actual processing, the light blocking layer 22 may be manufactured through a vapor evaporation method or an electroplating method, and the light transmission pinholes 27 on the light blocking layer 22 may be formed by an etching process.

According to the law of refraction of light, a light is refracted when transmitting from a medium A with a refractive index *n_{A}* to a medium B with a refractive index *n_{B}*, and sin *θ_{A}* / sin *θ_{B}* = *n_{B}* / *n_{A}*, where *θ_{A}* is an incident angle, and *θ_{B}* is an emergent angle.

If *n_{B}* < *n_{A}*, when an incident angle that the light travels from the medium A to the medium B is *θ_{A}* ≥ arcsin(*n_{B}*/*n_{A}*), a total reflection occurs. This condition is referred to as a total reflection condition.

If *n_{B}* > *n_{A}*, an emergent angle after the light travels from the medium A into the medium B is *θ_{B}* < arcsin(*n_{A}* / *n_{B}*), which is definitely less than 90 degrees. This condition is referred to as a confined emergent angle condition.

Unless otherwise stated, these definitions are also applicable to other embodiments.

In the present embodiment, a refractive index of the third transparent medium layer 25 is *n*₁; the refractive indexes of the first transparent medium layer 23, the second transparent medium layer 24, and the fourth transparent medium layer 26 are *n*₂; and *n*₁ *< n*₂*.*

When the light travels from the fourth transparent medium layer 26 to the third transparent medium layer 25, according to the total reflection condition, only the light with the incident angle less than arcsin(*n*₁ / *n*₂) can be transmitted into the third transparent medium layer 25 through the fourth transparent medium layer 26, while other lights are totally reflected back to the fourth transparent medium layer 26, not being transmitted into the third transparent medium layer 25. Therefore, an interface between the third transparent medium layer 25 and the fourth transparent medium layer 26 function to filter the lights, so that only the light meeting a set condition can be transmitted into the third transparent medium layer 25.

According to the confined emergent angle condition, a light is refracted when travelling from the third transparent medium layer 25 to the second transparent medium layer 24, and an emergent angle of the light is less than arcsin(*n*₁/*n*₂). As shown in Fig. 4, the light through the second transparent medium layer 24 partially travels into the first transparent medium layer 23 through the light transmission pinholes 27. Because the first transparent medium layer 23 and the second transparent medium layer 24 have the same refractive index, the image-side angle of view *λ* of the light transmission pinhole 27 is confined to arcsin(*n*₁/*n*₂).

As described above, the thickness of the first transparent medium layer 23 is *h*₁. Therefore, a diameter of the image-side field of view formed on the image sensor 21 by the light transmission pinhole 27 is *D*_{image} = 2*h*₁ × tan *λ*, and the image-side field of view formed on the image sensor 21 by the light transmission pinhole 27 has a confined value.

It can be understood that, because the thickness of the light blocking layer 22 is much smaller than the existing field-of-view diaphragm, the thickness of the image acquisition device of the present embodiment can become much smaller than that of the image acquisition device using the field-of-view diaphragm. In addition, because a process of etching for the light transmission pinholes 27 on the light blocking layer 22 is easier than a process of manufacturing the field-of-view diaphragm, the image acquisition device provided by the present embodiment can be easily manufactured at low costs.

As shown in Fig. 4, in the present embodiment, in order to further reduce the thickness of the image acquisition device, the light blocking layer 22 are provided with a plurality of light transmission pinholes, and the distance *d* between the adjacent light transmission pinholes 27 is greater than or equal to *D_{image}.* Because the distance *d* between the adjacent light transmission pinholes 27 is greater than or equal to *D_{image},* the image-side fields of view of the adjacent light transmission pinholes 27 do not overlap with each other.

Certainly, in the image acquisition device provided by other embodiments, the number of the light transmission pinholes 27 on the light blocking layer 22 may be set to one.

To confine the image-side field of view of the light transmission pinhole 27 more effectively, it is usually desired that the refractive index of the third transparent medium layer 25 is much smaller than that of other transparent medium layers. Therefore, the third transparent medium layer 25 is preferably a vacuum layer or an air layer.

It should be noted that, the first transparent medium layer 23, the second transparent medium layer 24, and the fourth transparent medium layer 26 that have the same refractive index is merely a preferred implementation of the present application. In other embodiments, their refractive indexes may be different with each other, which does not affect implementation of the function of the image acquisition device.

In addition, in other embodiments, the number of the transparent medium layers and the thickness thereof may be adjusted depending on requirements. For example, the second transparent medium layer 24 is removed, so that the light blocking layer 22 is directly adjacent to the third transparent medium layer 25; or the fourth transparent medium layer 26 is removed; or both of the second transparent medium layer 24 and the fourth transparent medium layer 26 are removed (in this case, if the third transparent medium layer 25 is an air layer, the structure of the image acquisition device is the same as that of the image acquisition device provided by the first embodiment); or each transparent medium layer may include one or a plurality of transparent medium sub-layers.

### Third embodiment

Fig. 5 is a schematic structural diagram of an image acquisition device according to the third embodiment. As shown in Fig. 5, the present embodiment is basically the same as the embodiment corresponding to Fig. 4 in structure and function, but differs in that the second transparent medium layer 24 and the third transparent medium layer 25 in the present embodiment are located under the light blocking layer 22. As shown in Fig. 5, an image-side field of view formed on the image sensor 21 by the light transmission pinhole 27 also has a confined value.

Certainly, in other embodiments, the number of the transparent medium layers and the thickness thereof may be adjusted depending on requirements. For example, the first transparent medium layer 23 may be removed; or the second transparent medium layer 24 may be removed; or both of the first transparent medium layer 23 and the second transparent medium layer 24 may be removed; or the fourth transparent medium layer 26 may be removed, so that the light blocking layer is located on an upper surface of the entire image acquisition device; or each transparent medium layer may include one or a plurality of transparent medium sub-layers.

In addition to the foregoing image acquisition device, an embodiment of the present application further provides a fingerprint acquisition apparatus using the foregoing image acquisition device.

The image acquisition device and the fingerprint acquisition apparatus in the embodiments of the present application are detailed above. The principle and implementations of the present application are described by using specific embodiments herein. The foregoing descriptions of the embodiments are intended only to help understand the core idea of the present application. All other embodiments obtained by persons of ordinary skill in the art within the principle of the present application without creative efforts shall fall within the protection scope of the present application.

## Claims

1. An image acquisition device, wherein the image acquisition device comprises a transparent plate, an image sensor disposed under the transparent plate, and a light blocking layer disposed on an upper surface of the transparent plate;
the light blocking layer is provided with a plurality of light transmission pinholes; and an image-side angle of view of the light transmission pinhole is *λ* = arcsin(*n*₁/*n*₂), wherein *n*₁ is a refractive index of a medium above the light blocking layer, *n*₂ is a refractive index of the transparent plate, and *n*₂ > *n*₁; and
a distance *d* between centers of adjacent light transmission pinholes is greater than or equal to a diameter *D_{imαge}* of an image-side field of view of the light transmission pinhole, wherein *D_{image}* = 2*h*₁ × tan *λ*, and *h*₁ is a thickness of the transparent plate.

2. An image acquisition device with a size of a field of view for pinhole imaging being confined by using transparent medium layers having different refractive indexes, wherein the image acquisition device comprises:
an image sensor;
a light blocking layer that is disposed over the image sensor and has several light transmission pinholes; and
one transparent medium layer or a plurality of transparent medium layers disposed between the light blocking layer and the image sensor, and one transparent medium layer or a plurality of transparent medium layers disposed on the light blocking layer, wherein
a refractive index of at least one medium layer is less than that of the remaining transparent medium layers; and
a size of an image-side field of view formed on the image sensor by the light transmission pinhole has a confined value.

3. The image acquisition device according to claim 2, wherein the transparent medium layer having the smallest refractive index is a vacuum layer or an air layer.

4. A fingerprint acquisition apparatus, wherein the fingerprint acquisition apparatus comprises the image acquisition device according to any one of claims 1 to 3.
